# EUROPEAN PATENT APPLICATION

(11) **EP 4 307 579 A1**
(43) Date of publication of application: **17.01.2024**
(21) Application number: 22185130.6
(22) Date of filing: 15.07.2022
(51) Int. Cl.: H04B 7/185

(54) **PROTECTION SYSTEM AND METHOD FOR PROTECTING AERIAL VEHICLES**

(71) Applicant: HENSOLDT Sensors GmbH, 82024 Taufkirchen (DE)
(72) Inventor: Veitl, Klaus, 98171 Illerkirchberg (DE)
(74) Representative: LifeTech IP Spies & Behrndt Patentanwälte PartG mbB

(57) **Abstract**

A protection system for an aerial vehicle (50) from radio frequency, RF-, transmissions (60) of a transmitter (70) attached to the aerial vehicle (50) is disclosed. The system comprises: one or more RF-detectors (110, 120) adapted to detect an RF-transmission (60) directed into the aerial vehicle (50); and one or more switches (210, 220) adapted to turn off the transmitter (70) upon detection of the RF-transmission (60).

## Description

The present invention relates to a protection system and a method for protecting aerial vehicles from radio frequency, RF-, transmissions and, in particular, to an RF-interlock for aircraft payloads.

### BACKGROUND

Transmitters of radio frequency, RF-, transmissions onboard of an aircraft can severely disturb the avionics system of the aircraft with possibly fatal consequences. Therefore, these transmitters are carefully to be considered during an aircraft design phase. If transmitters are needed onboard of an aircraft they are extensively tested and certified in advance. For an external payload with an RF-transmitter in a pod such as a radar, communication device or an escort support jammer (ESJ) the certification effort is much more complicated, because this RF-transmitter has not been considered and tested during the design of the aircraft. Specifically, with the widespread active electronically scanned array (AESA) technology, it cannot be guaranteed with a sufficient level of confidence that the antenna of those transmitters does not transmit into the aircraft and possibly disturbs the avionics systems such as the primary flight control system.

Therefore, if possible, such a pod is installed in a position which prevents transmission into the aircraft. Such positions are for example the outer wing station and other antenna installations away from the aircraft body. For many aircraft, however, this is not always possible because carriage can only be attached under the aircraft body (in the centerline). This aggravates the problem due to the close distance to the aircraft wiring inside the aircraft body.

A conventional solution utilizes software mechanisms to prohibit transmissions into the aircraft. Depending on the national aircraft certification authorities, such measures may be acceptable under certain conditions such as for software fulfilling a very high design assurance level (DAL). For other certification authorities, even this would not be acceptable - in particular when they are very accurate for all types of certifications.

Therefore, there is a demand for alternative solutions in order to be able to use transmitters in an aircraft payload which can safely be used during the aircraft operation.

### SUMMARY OF THE INVENTION

At least some of the above-mentioned problems are overcome by a protection system according to claim 1 or a method for protecting aerial vehicles according to claim 12.

The present invention relates to a protection system for an aerial vehicle from radio frequency, RF-, transmissions of a transmitter attached to the aerial vehicle. The system comprises: one or more RF-detectors and one or more switches. The one or more RF-detectors are adapted to detect an RF-transmission directed into the aerial vehicle. The one or more switches are adapted to turn off the transmitter upon detection of the RF-transmission.

The aerial vehicle may comprise a vehicle body and the transmitter may be designed to send out RF-transmissions under normal conditions away from vehicle body. The one or more RF-detectors may be adapted to detect the RF-transmission as a transmission accidentally directed into the vehicle body. There may be various reasons resulting in the accidental transmission into the aerial vehicle. For example, a defect or a damage in the mounting of a pod with the transmitter may have occurred, or an antenna may have changed (e.g. the pod/antenna may be hit by an object). Other reasons for the accidental transmission may include an unintended reflection of a nearby object or a software error or interferences or other reasons.

Optionally, the one or more RF-detectors include a first RF-detector and a second RF-detector. Each of the RF-detectors may be adapted to control the one or more switches to turn off the transmitter independently.

Optionally, the one or more switches include a first switch controlled by the first RF-detector and a second switch controlled by the second RF-detector. The first switch and the second switch may be each adapted to turn off the transmitter independently.

Optionally, the one or more RF-detectors are directly connected to the one or more switches to turn off the transmitter by a sole hardware control. Therefore, embodiments are particularly implemented only in hardware. For example, the RF-detectors do not include any logic or processor, the signal processing may be purely analogue. Furthermore, the switches may be integrally included in the RF-detectors and can be controlled by analog signals generated by the RF-detector(s).

Optionally, the one or more switches are self-opening switches to turn off the transmitter as a default state. Again, the feature of self-opening is advantageously implemented in hardware and not in software. For example, switches may be realized by transistors and self-opening switches may be realized by self-depleting transistors, which are closed only as long as a valid control signal is present at the switches (e.g. a certain voltage at the gate). There are likewise more complicated mono-stable transistor circuits or mono-stable relays that may be used as self-opening switches. The self-opening switches provide the advantage that they will automatically turn off the transmitter, when no power is available. So, the default state will be safe.

Optionally, the aerial vehicle comprises a power supply for the transmitter, and the transmitter may be located outside of the vehicle body of the aerial vehicle. Then, the one or more switches may be each configured to turn off the transmitter by interrupting the power supply from aerial vehicle. The transmitter may receive its power only from the power supply of the aerial vehicle and there is no secondary power source such as a battery. This will ensure that the transmitter will immediately cease any transmission when the connection to the power supply is interrupted.

Optionally, the one or more RF-detectors have at least one secondary power supply which is configured to supply power independently from the power supply (e.g. of the aircraft). Therefore, the RF-detectors can advantageously operate autarkic and do not rely on any external input for their correct operation.

Optionally, the transmitter is part of a payload (e.g. a pod) externally attached to the aerial vehicle and supplied by power from the aerial vehicle. Then, the one or more one or more switches may be further adapted to turn off the (whole) power supply for the payload. This may turn off, at the same time, the power for the transmitter.

Embodiments relate also to an aerial vehicle (e.g. an aircraft) with a system as described before. Thus, the aerial vehicle may be an aircraft. Further embodiments relate to other aerial vehicles such as unmanned flying objects such as drones or helicopters.

Optionally, the aerial vehicle comprises a payload attachable to an outside of the vehicle, wherein the payload includes the transmitter. The payload may be or may include an escort support jammer unit, which includes the transmitter and is exposed to outside of the aerial vehicle. Under normal operation, the transmitter may be designed to transmit RF-signal away from the aerial vehicle, otherwise the protection system will reliably prevent any transmission into the aerial vehicle (e.g. into the aircraft body).

Embodiments relate also to a method for protecting an aerial vehicle from radio frequency, RF-, transmissions of a transmitter attached to the aerial vehicle. The method comprises:
- Detecting, by one or more RF-detectors, an RF-transmission directed into the aerial vehicle; and
- Turning off, by one or more switches, the transmitter upon detection of the RF-transmission.

Embodiments overcome the shortcomings of the conventional systems by using detectors for radiofrequency transmissions which are installed in an aerial vehicle such as an aircraft or on a skin of the aircraft in combination with interlocks (for example switches) to disrupt any transmission immediately when the transmission is accidentally directed into the aircraft and not into the surrounding of the aircraft. The accidental transmission into the aircraft may be related to a malfunctioning/error or detrimental external conditions (e.g. reflections at objects).

Advantageously, the problems are solved by a hardware solution which provides an extremely high assurance level. For this, for example, a serial installation of two or more sensors is possible which reliably work even if one or more sensors fail.

Embodiments provide the advantage that it allows an add-on function for payloads such as an ESJ pod. Such payloads can thus be installed on the aircraft, which otherwise would not be certifiable without this function. In addition, the development effort is reduced as a lower DAL level for the payload itself becomes acceptable. Finally, an integration effort into the exemplary aircraft is minimized. No additional space needs, which is frequently not available in aircrafts.

### BRIEF DESCRIPTION OF THE DRAWINGS

Various embodiments of the present invention will be described in the following by way of examples only, and with respect to the accompanying drawings, in which:
- Fig. 1: depicts a protection system for an aerial vehicle according to an embodiment of the present invention.
- Fig. 2: shows an aerial vehicle with the protection system according to embodiments.
- Fig. 3: illustrates a method for protecting an aerial vehicle from accidental RF-transmissions according to embodiments.

### DETAILED DESCRIPTION

Various examples will now be described more fully with reference to the accompanying drawings in which some examples are illustrated.

Accordingly, while examples are capable of various modifications and alternative forms, the illustrative examples in the figures will herein be described in detail. It should be understood, however, that there is no intent to limit examples to the particular forms disclosed, but on the contrary, examples are to cover all modifications, equivalents, and alternatives falling within the scope of the disclosure. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing illustrative examples only and is not intended to be limiting. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, steps, operations, elements and/or components, but do not preclude the presence or addition of one or more other features, steps, operations, elements, components and/or groups thereof.

Unless otherwise defined, all terms (including technical and scientific terms) used herein have the same meaning as commonly understood by one of ordinary skill in the art to which examples belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

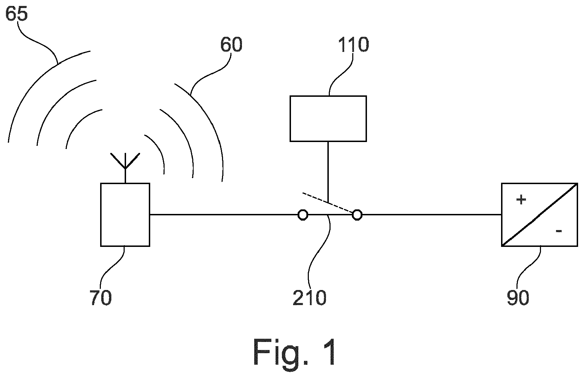

**Fig. 1** illustrates an embodiment for a protection system for an aerial vehicle (not shown in Fig. 1) from radio frequency, RF-, transmissions 60 of a transmitter 70. The transmitter 70 may be attached to the aerial vehicle (e.g. an aircraft). The transmitter 70 may be part of an external installation (payload) on the aerial vehicle which during normal operation shall transmit RF-signals 65 only away from the exemplary aircraft.

However, under exceptional circumstances, it may happen that accidental transmissions 60 are emitted into the aircraft, which are reliably be prevented by embodiments. For this, the protection system includes at least one RF-detector 110 and at least one switch 210. The RF-detector 110 is adapted to detect the RF-transmission 60, when it is directed into the aerial vehicle. Therefore, the RF-detector 110 may be installed such that its coverage area will cover an area of the vehicle body (or outer skin) through which the RF-transmission 60 may enter the aircraft body. The switch 210 is adapted to turn off the transmitter 70 upon the detection of the RF-transmission 60 and thus to disable the transmitter 70 completely. After turning off, according to embodiments, the RF-transmitter 70 cannot transmit any RF-signal - not even the normal, intended RF-transmissions 65.

The turning off of the transmitter 70 may, for example, be achieved by interrupting a power supply from a power source 90 which maybe installed inside the aerial vehicle. The power supply 90 may also be part of the external installation, but advantageously the transmitter has not access to another (backup) power supply. To further increase the reliability, the RF-detector 110 and the switch 210 maybe purely hardware-controlled and shall not include any logic or software stored on a storage medium. Instead, the whole signal processing may be purely analogue.

According to the further embodiments, the power supply 90 may provide power for the whole payload (not only for the RF-transmitter 110) and the switch(es) may be configured to turn off the power supply for the payload or the pod completely, which will in turn also interrupt the power supply for the RF transmitter 110.

The depicted embodiment of Fig. 1 has only a single switch 210 with a single RF-detector 110. According to further embodiments, more switches (two or more) are possible which can be connected in a serial connection or can be connected to another wiring which safely ensures that the transmitter 70 is disabled when the RF-transmissions 60 has been detected. Similarly, more RF-detectors (two or more) may be implemented to control independently the switch 110 or the further switches.

Therefore, embodiments provide a complete redundant and hardware-based setup for complying with the highest safety requirements for preventing any accidental transmission into the aerial vehicle.

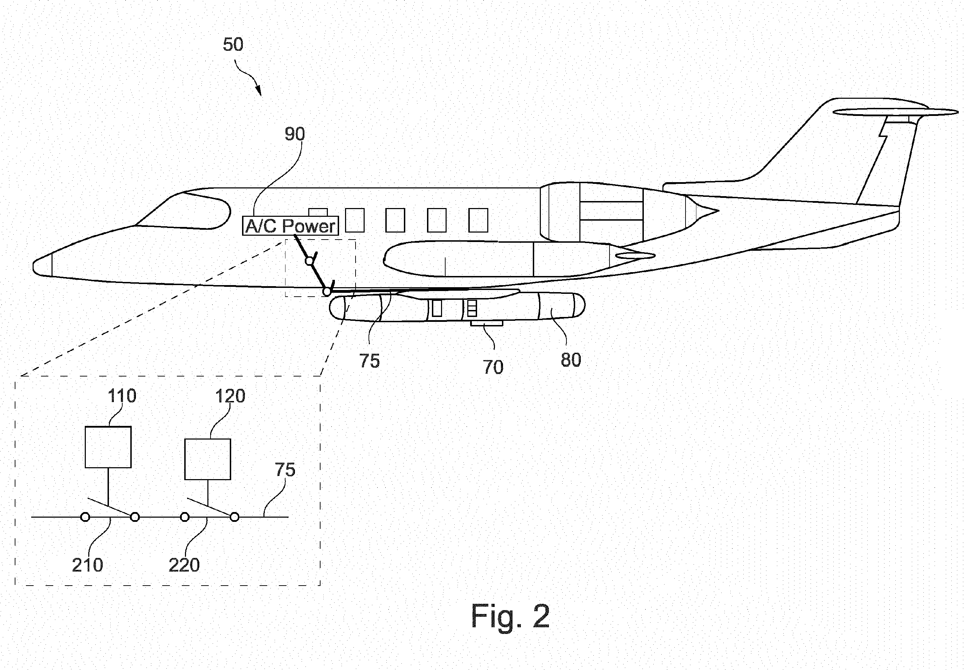

**Fig. 2** shows an embodiment for a particular aerial vehicle 50 with a vehicle body 52 accommodating the power supply 90. In addition, a payload 80 (e.g. an ESJ pod) is installed underneath the aircraft body 52. The payload 80 includes the transmitter 70, which is connected with the power supply 90 over a power line 75 to provide power from inside the exemplary aircraft 50 to the payload 80.

According to embodiments the aerial vehicle 50 includes the protection system installed between the power supply 90 and the payload 80 along the power line 75 (see enlarged portion). The protection system according to this embodiment includes two switches 210, 220 arranged in a serial connection between the transmitter 70 and the power supply 90. Each of the two switches 210, 220 are controlled by a separate RF-detector 110, 120 which are configured to open the switches 210, 220 upon the detection of the RF-transmission 60, when it is directed into the exemplary aircraft.

In the redundant installation shown in Fig. 2, the first switch 210 is controlled by the first RF-detector 110 and the second switch 220 is controlled by the second RF-detector 120. Both switches 210, 220 are arranged in serial connection along the power line 75 so that if already one of the switches 210, 220 is actuated (placed in the open position), the transmitter 70 is turned off which will immediately interrupt any transmission from the transmitter 70 to ensure that no detrimental RF-radiation can enter the aircraft body 52.

The switches 210, 220 may in particular be configured to have as a default position an open state (power line 75 is interrupted), i.e. they are so-called self-opening switches. This may be achieved by mono-stable relays or mono-stable transistor circuits. For this, self-depleting transistors may be utilized which deplete in the absence of any control signals at the gate so that no charge carriers are available to keep the transistor channel open.

Therefore, as long as the RF-detectors 110, 120 provide a corresponding signal to the switches 210, 220 the switches 110, 120 remain close and the transmitter 70 can operate as intended (transmitting the RF-Signal 65, see Fig. 1). If, however, the RF-detectors 110, 120 receive the accidental RF-transmission 60 into the aircraft body, the corresponding signal to switches 210, 220 may be interrupted resulting immediately in the open state for the switches 210, 220. Thereafter, the switches 210, 220 would need an explicit confirmation that the system is in a safe state. Only then, the transmitter 70 may be allowed to transmit again. It is understood that the embodiment shall not be limited on this particular implementation.

The detector(s) 110, 120 may be installed inside the exemplary aircraft body 52, but could also be part of the external installation 80 as long as they are able to detect any transmission which is directed towards the aircraft vehicle 50 or vehicle body 52.

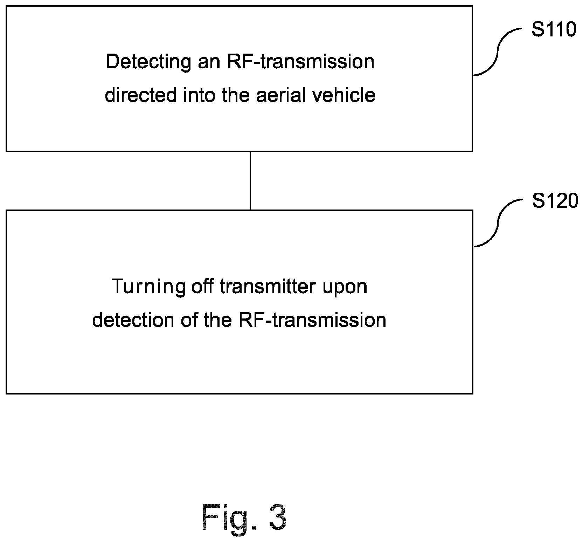

**Fig. 3** shows a schematic flow chart for a method for protecting an aerial vehicle 50 from radio frequency, RF-, transmissions 60 of a transmitter 70 attached to the aerial vehicle 50. The method comprises the steps:
- Detecting S110, by one or more RF-detectors 110, 120, an RF-transmission 60 directed into the aerial vehicle 50; and
- Turning off, by one or more switches 210, 220, the transmitter 70 upon detection of the RF-transmission 60.

It is understood that all function described before in conjunction with the protection system may be implemented in this method as further optional steps.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

Although the invention has been illustrated and described in detail by way of preferred embodiments, the invention is not limited by the examples disclosed, and other variations can be derived from these by the person skilled in the art without leaving the scope of the invention. It is therefore clear that there is a plurality of possible variations. It is also clear that embodiments stated by way of example are only really examples that are not to be seen as limiting the scope, application possibilities or configuration of the invention in any way. In fact, the preceding description and the description of the figures enable the person skilled in the art to implement the exemplary embodiments in concrete manner, wherein, with the knowledge of the disclosed inventive concept, the person skilled in the art is able to undertake various changes, for example, with regard to the functioning or arrangement of individual elements stated in an exemplary embodiment without leaving the scope of the invention, which is defined by the claims and their legal equivalents, such as further explanations in the description.

### List of reference signs

- 50: area vehicle (e.g. aircraft, drone etc.)
- 52: body of areal vehicle
- 60: accidental RF-transmission
- 65: normal RF-transmission
- 70: transmitter
- 72: power line
- 80: (aircraft) payload
- 90: power supply
- 110, 120, ... RF-: detectors
- 210, 220, ...: switches

## Claims

1. A protection system for an aerial vehicle (50) from radio frequency, RF-, transmissions (60) of a transmitter (70) attached to the aerial vehicle (50), the system comprising:
one or more RF-detectors (110, 120) adapted to detect an RF-transmission (60) directed into the aerial vehicle (50); and
one or more switches (210, 220) adapted to turn off the transmitter (70) upon detection of the RF-transmission (60).

2. The system according to claim 1, wherein the aerial vehicle (50) comprises a vehicle body (52) and the transmitter (70) is designed to send out normal RF-transmissions (65) away from vehicle body (52),
the one or more RF-detectors (110, 120) are adapted to detect the RF-transmission (60) as a transmission accidentally directed into the vehicle body (52).

3. The system according to claim 1 or claim 2, wherein the one or more RF-detectors (110, 120) include a first RF-detector (110) and a second RF-detector (120), each of which are adapted to control the one or more switches (210, 220) to turn off the transmitter (70).

4. The system according to claim 3, wherein the one or more switches (210, 220) include a first switch (210) controlled by the first RF-detector (110) and a second switch (220) controlled by the second RF-detector (220), the first switch (210) and the second switch (220) are each adapted to turn off the transmitter (70).

5. The system according to any of claims 1 to 4, wherein the one or more RF-detectors (110, 120) are directly connected to the one or more switches (210, 220) to turn off the transmitter (70) by a sole hardware control.

6. The system according to any of claims 1 to 5, wherein the one or more switches (210, 220) are self-opening switches to turn off the transmitter (70) as a default state.

7. The system according to any of claims 1 to 6, wherein the aerial vehicle (50) comprises a power supply (90) for the transmitter (70), the transmitter (70) is located outside of the vehicle body (52),
wherein the one or more switches (110, 120) are each configured to turn off the transmitter (70) by interrupting the power supply (90) from aerial vehicle (50) to the transmitter (70).

8. The system according to claim 7, wherein the one or more RF-detectors (110, 120) have at least one secondary power supply which is configured to supply power independently from the power supply (90).

9. The system according to any of claims 1 to 8, wherein the transmitter (60) is part of a payload (80) externally attached to the aerial vehicle (50) and supplied by power from the aerial vehicle (50),
the one or more one or more switches (210, 220) being further adapted to turn off the power supply for the payload (80).

10. The aerial vehicle (50) with a system according to any of claims 1 to 9.

11. The aerial vehicle (50) according to claim 10 with a payload attached to an outside of the vehicle (50), the payload including the transmitter (70).

12. A method for protecting an aerial vehicle (50) from radio frequency, RF-, transmissions (60) of a transmitter (70) attached to the aerial vehicle (50), the method comprising:
Detecting (S110), by one or more RF-detectors (no, 120), an RF-transmission (60) directed into the aerial vehicle (50); and
Turning off, by one or more switches (210, 220), the transmitter (70) upon detection of the RF-transmission (60).
